# EUROPEAN PATENT SPECIFICATION

(11) **EP 3 526 378 B1**
(45) Date of publication and mention of the grant of the patent: **09.06.2021**
(21) Application number: 17768109.5
(22) Date of filing: 14.09.2017
(51) Int. Cl.: D03J 1/00, F01M 1/06, F16H 57/04

(54) **LUBRICATION SYSTEM FOR A WEAVING MACHINE**
SCHMIERUNGSSYSTEM FÜR EINE WEBMASCHINE
SYSTÈME DE LUBRIFICATION DESTINÉ À UN MÉTIER À TISSER

(30) Priority: 13.10.2016 BE 201600156
(43) Date of publication of application: 21.08.2019
(73) Proprietor: Picanol, 8900 Ieper (BE)
(72) Inventor: GEERARDYN, Geert, 8950 Nieuwkerke (BE)
(74) Representative: Patentanwälte Ruff, Wilhelm, Beier, Dauster & Partner mbB
(86) International application number: PCT/EP2017/073158
(87) International publication number: WO 2018/068982

(56) References cited:
- EP-A1- 0 535 726
- EP-A1- 0 903 532
- EP-A1- 1 477 639
- FR-A1- 2 984 991

## Description

### TECHNICAL FIELD AND PRIOR ART

The invention relates to a lubrication system for a drive system of a weaving machine, a use of the lubrication system in a drive system of a weaving machine, a device for a weaving machine comprising a drive system and a lubrication system for the drive system, and a weaving machine with such a device.

A weaving machine comprises several drive systems or drive mechanisms with elements, which are moveably connected. For example a shed forming device of a weaving machine comprises drive systems for driving heald frames to move up and down. The drive system for example comprises a shaft, a first transmission element mounted to the drive shaft so as to be rotatable with the drive shaft, and a second transmission element mounted to the first transmission element so as to be rotatable about a rotation axis provided on the first transmission element. The shaft in one embodiment is driven either directly or via a gearing system to rotate about its axis by means of a drive motor. The shed forming device in one embodiment comprises one drive motor assigned to a plurality of drive systems. In other embodiments, a plurality of drive motors is provided, wherein one drive motor is assigned to each drive system.

For lubricating a bearing of the drive system of a shed forming device, in particular a bearing by means of which a second transmission element in the form of a coupling rod is mounted to a first transmission element, FR 2 984 991 A1 discloses an oil lubrication system. The oil lubrication system shown in FR 2 984 991 A1 comprises a supply line attached to the coupling rod, wherein a supply nozzle is provided at a first end of the supply line, which supply nozzle is connected to a mouth of a passage provided in the coupling rod, which passage extends between the mouth provided at an outer surface of the coupling rod and the bearing. EP 0 535 726 A1 shows an entrainment pump for a viscous fluid comprising a rotating member that dips into a lubricating fluid and drags the lubricating fluid with it. The fluid is conveyed into a central bore in a drive shaft of the drive system, from which it is urged by centrifugal force through suitable holes, to lubricate main crank arms of the drive system.

### SUMMARY OF THE INVENTION

It is an object of the invention to provide a lubrication system for a drive system of a weaving machine, wherein a risk of a fabric or of threads for forming the fabric being soiled with lubricant, is minimized.

This object is solved by the lubrication system for a drive system of a weaving machine with the features of claim 1, the use of the lubrication system with the features of claim 10, the device for a weaving machine with the features of claim 11 and the weaving machine with the features of claim 14. Preferred embodiments are defined in the dependent claims. The invention offers the advantage that the risk of a fabric or of threads for forming the fabric being soiled with lubricant is minimized, as due to the invention the risk of broken or disconnected supply lines is avoided. The invention also offers the advantage that the risk of failing of the lubrication system due to broken or disconnected supply lines is avoided.

According to a first aspect, a lubrication system for a drive system of a weaving machine is provided, wherein the drive system comprises a housing arranged stationary at the weaving machine and a shaft rotatably mounted fixed in position in the housing, wherein the shaft is provided with a first lubricant channel extending at least at a first end coaxially to the shaft axis of the shaft and wherein the lubrication system comprises a lubricant fitting adapted to be mounted to the first end of the first lubricant channel for rotation with the shaft and a connection piece adapted to be arranged stationary at the housing, the connection piece comprising an inlet adapted to receive a lubricant supply line and an outlet positioned opposite an entry of the lubricant fitting for supplying lubricant to the lubricant fitting.

In the context of the application, the term "stationary arranged" or ""stationary arrangement" is to be understood as meaning that the respective element is arranged fixed in position with respect to a reference system and arranged in a non-rotatable manner. The term "arranged fixed in position" is to be understood as meaning that the element is arranged in a fixed position with respect to a reference system, but the element may be mounted so as to be rotatable about a central axis.

By arranging a connection piece stationary at a housing arranged stationary at the weaving machine having an inlet for the supply lines, moving supply lines, which are subjected to wear and deterioration, are avoided. The connection piece can be either formed integrally with the housing or formed separately and mounted fixed in position to the housing.

When mounting the lubricant fitting to the first end of the first lubricant channel for rotation with the shaft, the entry of the lubricant fitting is arranged fixed in position but rotatable together with the shaft about the shaft axis. The entry of the lubricant fitting in preferred embodiments has rotational symmetry. In one embodiment, the lubricant fitting has a ring shaped entry. In preferred embodiments, the lubricant fitting has an entry with a circular cross-section. The outlet of the connection piece is positioned opposite the entry of the lubricant fitting for supplying a lubricant. In one embodiment, a front wall of the connection piece surrounding the outlet contacts the lubricant fitting, wherein the front wall and the lubricant fitting are in permanent contact. In this case, upon rotation of the shaft, the lubricant fitting is in sliding contact with the front wall.

In preferred embodiments, an operating element provided with a lubricant passage is slidably mounted in the outlet, wherein the operating element is moveable into and out of a supply position, in which supply position the front end of the operating element contacts the lubricant fitting. In this case, the front wall of the connection piece is at a distance from the lubricant fitting and the operating element only contacts the lubricant fitting when arranged in the supply position. Thereby, wear due to a permanent sliding contact is avoided. The operating element in one embodiment is moved by means of a manual-operated or motor-driven drive system.

In preferred embodiments, the lubricant passage is provided with a first lubricant passage part and a second lubricant passage part arranged downstream of the first lubricant passage part in a lubricant supply direction, wherein the diameter of the first lubricant passage part is smaller than the diameter of the second lubricant passage part. In this case, a supply of a lubricant forces the operating element to move into the supply position. In particular when using grease as the lubricant, due to the viscosity of the grease, the grease will enter slowly into the first lubricant passage part and pass slowly through said first lubricant passage part, so that the lubricant supplied at the inlet will cause a pressure force on an end wall of the operating element, which pressure force will force the operating element towards the lubricant fitting, until the operating element comes into contact with the lubricant fitting, thereby communicating a free end of the second lubricant passage part with the entry of the lubricant fitting.

In order to avoid a rotation of the lubricant fitting relative to the operating element, in one embodiment, lubricant is supplied only at idle times of the drive system, this means when the shaft is not rotating about the shaft axis. In preferred embodiments, the operating element is rotatably mounted in the outlet. Hence, depending on the amount of friction between the operating element and the lubricant fitting and the amount of friction between the operating element and other elements, the operating element when forced against the lubricant fitting will whether or not rotate together with the lubricant fitting.

In order to avoid a lubricant leak flow between the operating element and the connection piece, in preferred embodiments a sealing ring is provided between the operating element and the connection piece.

In one embodiment, the connection piece is provided with a bypass opening communicating with an outside of the connection piece with an exit side of the outlet for excessive lubricant.

In order to avoid leaking of the first lubricant channel in particular upon rotation of the shaft, the lubricant fitting in one embodiment is provided with a valve element at its entry, in particular a check valve element.

The lubrication system in preferred embodiments comprises a supply line having a first end and a second end, which supply line is connected with its first end to the inlet of the connection piece, wherein its second end is provided with a grease nipple. The second end can be arranged at any suitable position which is easily accessible by an operator. Due to the stationary arrangement of the connection piece, the supply lines are not moved upon operation of the drive system and, are therefore, less subjected to wear and deterioration compared to moveably arranged supply lines. The supply lines preferably are tube-shaped.

In preferred embodiment, the lubrication system is adapted to use a grease as the lubricant.

According to a second aspect, a use of a lubrication system in a drive system for a weaving machine, in particular in a drive system of a shed forming device for a weaving machine, is provided, wherein the drive system comprises a housing and a shaft rotatably mounted in a fixed position in the housing, wherein the shaft is provided with a first lubricant channel extending at least at a first end coaxially to the shaft axis, and wherein the lubrication system comprises a lubricant fitting adapted to be mounted to the first end of the first lubricant channel for rotation with the shaft and a connection piece adapted to be arranged stationary at the housing, the connection piece comprising an inlet adapted to receive a lubricant supply line and an outlet positioned opposite an entry of the lubricant fitting for supplying lubricant to the lubricant fitting.

According to a third aspect, a device for a weaving machine is provided, in particular in a shed forming device for a weaving machine, the device comprising a drive system and a lubrication system, wherein the drive system comprises a housing and a shaft rotatably mounted in a fixed position in the housing, wherein a first lubricant channel is provided in the shaft extending at least at a first end coaxially to the shaft axis, and wherein the lubrication system comprises a lubricant fitting adapted to be mounted to the first end of the first lubricant channel for rotation with the shaft and a connection piece adapted to be arranged stationary at the housing, the connection piece comprising an inlet adapted to receive a lubricant supply line and an outlet arranged opposite the lubricant fitting for supplying lubricant to the lubricant fitting.

In one embodiment, the device for the weaving machine according to the invention is a drive system for a backrest device of a weaving machine. Other devices employing the lubrication system according to the invention are conceivable.

In preferred embodiments, the device is a shed forming device and the drive system comprises the shaft, a first transmission element mounted to the shaft so as to be rotatable with the shaft, and a second transmission element mounted to the first transmission element so as to be rotatable about a rotation axis provided on the first transmission element. Preferably, in this case a lubricant channel system is provided comprising the first lubricant channel extending coaxially to the shaft axis, a second lubricant channel extending radially to the shaft axis in a mounting area of the first transmission element, and a third lubricant channel communicating with the second lubricant channel and with a bearing, by means of which bearing the second transmission element is mounted to the first transmission element. The lubrication system in combination with the lubricant channel system allows lubrication of a moveable bearing arranged at the first transmission element by means of stationary supply lines. The first transmission element for example is a crank, wherein a coupling rod is rotatably mounted to the crank by means of the bearing.

According to one embodiment, the shaft is mounted in the housing by means of two bearings, wherein the bearings for mounting the shaft in the housing are lubricated using an oil lubrication system, which is separated by means of sealing elements from the lubrication system according to the invention.

According to a fourth aspect, a weaving machine comprising at least one device with at least one drive system and an associated lubrication system is provided. In one embodiment, several lubrication systems are provided in a weaving machine, wherein for example each heald frame is moved by means of one drive system and a lubrication system is assigned to each of these drive systems.

### BRIEF DESCRIPTION OF THE DRAWINGS

In the following, an embodiment of the invention will be described in detail with reference to the drawings. Throughout the drawings, the same elements will be denoted by the same reference numerals.
- Fig. 1: shows a heald frame and a drive system of a shed forming device;
- Fig. 2: is a perspective view of elements of a drive system similar to Fig. 1;
- Fig. 3: is a perspective view of a detail of Fig. 2;
- Fig. 4: is a sectional view of the detail of Fig. 2;
- Fig. 5: is a sectional view of the detail of Fig. 4 in a first state;
- Fig. 6: is a sectional view of the detail of Fig. 4 in a second state;
- Fig. 7: is a sectional view of the detail of Fig. 4 in a third state; and
- Fig. 8: is a detail of the operating element of Fig. 7.

### DETAILED DESCRIPTION OF EMBODIMENTS OF THE INVENTION

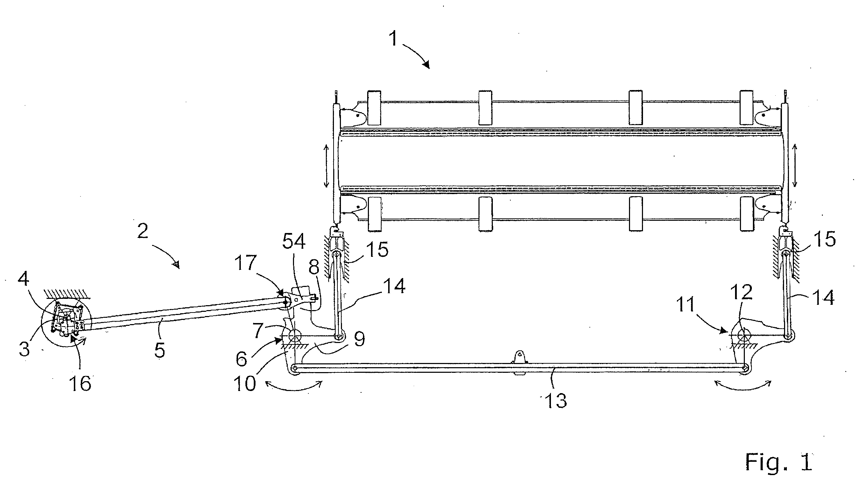

Fig. 1 shows a heald frame 1 and a drive system 2 of a shed forming device of a weaving machine (not shown). The shed forming device comprises a number of heald frames 1 and an equal number of drive systems 2, wherein one drive system 2 is assigned to each heald frame 1.

The shown drive system 2 for driving the heald frame 1 comprises a first transmission element in the form of a crank 3 mounted to a shaft (not shown in Fig. 1) rotating about a shaft axis 4, a second transmission element in the form of a coupling rod 5, and a swivel lever 6. The swivel lever 6 is swivelable to-and-fro about a swivel axis 7 between an upper position and a lower position. The swivel lever 6 has a first arm 8, a second arm 9 and a third arm 10. The drive system 2 further comprises a second swivel lever 11, swivelable to-and-fro about a second swivel axis 12 between an upper position and a lower position. The second swivel lever 11 is connected to the third arm 10 of the swivel lever 6 by means of a connecting rod 13 and driven by the swivel lever 6 to conjointly move with the swivel lever 6.

The heald frame 1 is mounted to the second arm 9 of the swivel lever 6 by means of a mounting assembly comprising a lifting rod 14 and guidance elements 15 arranged stationary at the weaving machine.

The coupling rod 5 of the drive system 2 is linked to the crank 3 by a first hinged joint 16, which first hinged joint 16 is eccentric to the shaft axis 4. Further, the coupling rod 5 is linked to a connecting element 54 by a second hinged joint 17, which connecting element 54 is attached to the first arm 8 of the swivel lever 6.

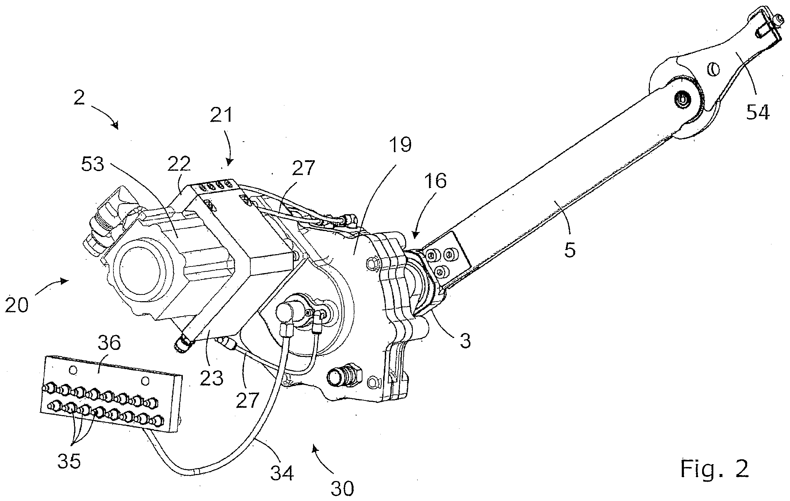

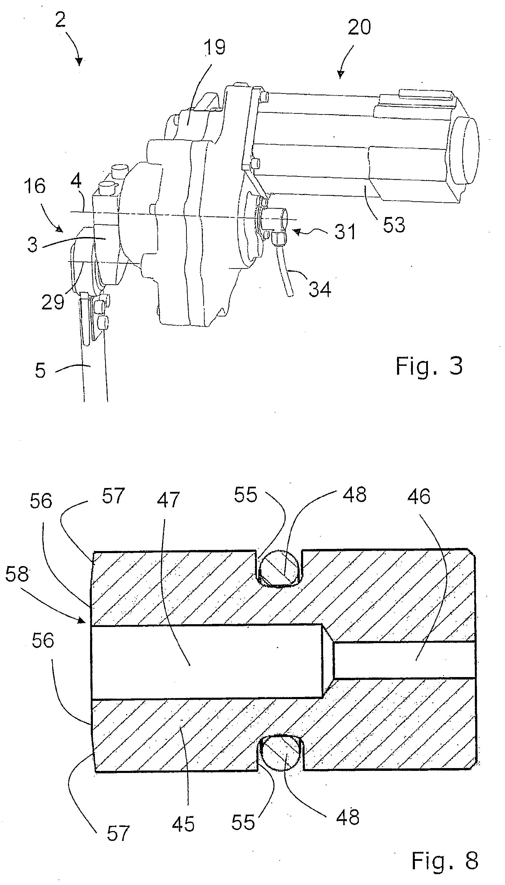

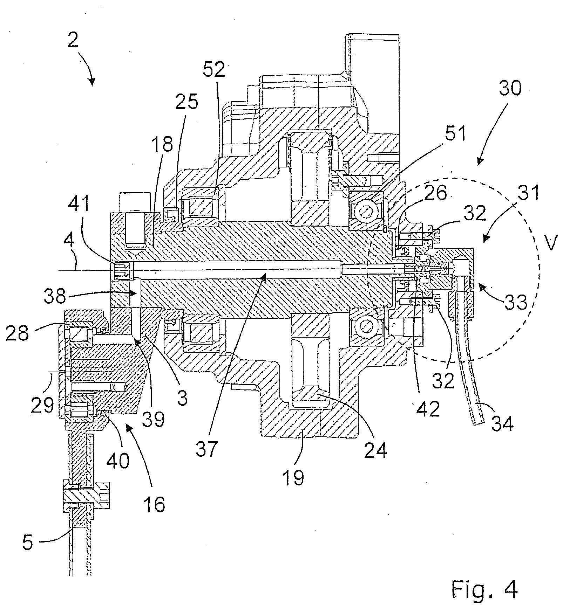

Fig. 2 is a perspective view of elements of a drive system 2 similar to Fig. 1. Fig. 3 is a perspective view of a detail of Fig. 2. Fig. 4 is a sectional view of the detail shown in Fig. 3.

The drive system 2 shown in Figs. 2 to 4 is similar to the drive system 2 shown in Fig. 1 and for the same or similar elements identical reference numbers are used.

The drive system comprises a shaft 18 (see Fig. 4), which is mounted rotatably about the shaft axis 4 (see Figs. 3 and 4) in a fixed position in the housing 19. The housing 19 in use is arranged stationary at the weaving machine, for example mounted to a frame (not shown) of the weaving machine. In the embodiment shown, the housing 19 comprises two parts, which are assembled using screws.

In the embodiment shown, a motor unit 20 (see Figs. 2 and 3) is assigned to each drive system 2 for driving the shaft 18 to rotate about the shaft axis 4. In the embodiment shown, for cooling the motor unit 20, a cooling case 21 is provided (only shown in Fig. 2), which surrounds a housing 53 of the motor unit 20. In the embodiment shown, the cooling case 21 comprises two parts 22, 23, which are connected for example by means of screws. In one embodiment, a heat guiding paste or thermal paste is provided between the cooling case 21 and the housing 53 of the motor unit 20 for an improved heat transmission between the motor unit 20 and the cooling case 21. Instead of an external cooling case 21, in an alternative embodiment a housing 53 of the motor unit 20 is provided with cooling channels.

As shown in Fig. 4, the shaft 18 is mounted in the housing 19 by means of two bearings 51, 52. The shaft 18 is coupled to the motor unit 20 by means of a gearing system with gear elements 24 (see Fig. 4). The gearing system is housed together with the shaft 18 in the housing 19. Hence, the housing 19 shown in Figs. 2 to 4 is also referred to as gear box. In the embodiment shown, the housing 19 is a sealingly closed element, wherein the elements arranged therein including the bearings 51, 52 and the gear elements 24 are lubricated with lubrication oil using an oil lubrication system. For this purpose, an interior space of the housing 19 is sealed using sealing elements 25, 26 (see Fig. 4). The lubrication oil of the oil lubrication system for the elements arranged inside the housing 19 is also used to cool the cooling case 21. For this purpose, the cooling case 21 is connected to the housing 19 using oil lines 27 (see Fig. 2). Preferably, an oil pump (not shown) is provided that forces the lubrication oil through the housing 19 and through the oil lines 27 to the cooling case 21.

In one embodiment, mixing tubes, obstructions or deflection elements are arranged inside the oil lines 27 and/or inside oil passages provided in the cooling case 21 and/or in a housing of the motor unit 20. By means of such elements, the lubrication oil flowing through the lines and/or the passages is disturbed and a cooling effect is enhanced. In one embodiment, screw shaped elements and/or spiral wires are provided as mixing tubes.

Further, an additional lubrication system 30 according to the invention for the drive system 2 is provided. In particular, a grease lubrication system 30 for lubricating a bearing 28 (see Fig. 4) of the first hinged joint 16 by means of which the second transmission element in the form of the coupling rod 5 is mounted to the first transmission element in the form of the crank 3 so as to be rotatable about a rotation axis 29 is provided.

Said lubrication system 30 comprises a connection piece 31, which in the embodiment shown is mounted stationary to the housing 19 by means of screws 32. The connection piece 31 has an inlet 33 adapted to receive a first end of a lubricant supply line 34. A second end of the lubricant supply line 34 is provided with a grease nipple 35 as shown in Fig. 2. As shown in Fig. 2, the grease nipple 35 in the embodiment shown is provided on a board 36 together with further grease nipples 35 provided for additional lubrication systems. The board 36 can be arranged at any suitable place on the weaving machine which is easily accessible to an operator.

As shown in Fig. 4, a lubricant channel system is provided, comprising a first lubricant channel 37 extending coaxially to the shaft axis 4, a second lubricant channel 38 extending radially to the shaft axis 4 in a mounting area of the first transmission element 3, and a third lubricant channel 39 communicating with the second lubricant channel 38 and with the bearing 28.

For forming the first lubricant channel 37 in the embodiment shown a through hole is provided, wherein for an improved flow of the lubricant, in the embodiment shown the first lubricant channel is provided with two sections of different diameters, wherein the second section arranged downstream of the first section has a larger diameter than the first section. The third lubricant channel 39 in the embodiment shown is provided with two sections extending perpendicular to one another. Such a lubricant channel is easy to manufacture. However, in other embodiments a curved lubricant channel or an inclined lubricant channel is provided. Sealing elements 40, 41 are provided for avoiding leaking.

The grease lubrication system 30 further comprises a lubricant fitting 42 mounted to the first end of the shaft 18 having the first lubricant channel 37 for rotation with the shaft 18 about the shaft axis 4. In the embodiment shown, the lubricant fitting 42 and the first end of the first lubricant channel 37 are provided with interacting screw threads and the lubricant fitting 42 is screwed into the first lubricant channel 37 of the shaft 18. In alternative the lubricant fitting 42 can also be pressed or glued into the first lubricant channel 37. The housing 19 is provided with an opening in the area of the lubricant fitting 42, which is covered by the connection piece 31, wherein an outlet of the connection piece 31 is positioned opposite an entry 44 of the lubricant fitting 42 for supplying lubricant coming from the lubricant supply line 34 to the lubricant fitting 42. The lubricant supplied then flows via the lubricant channel system to the bearing 28.

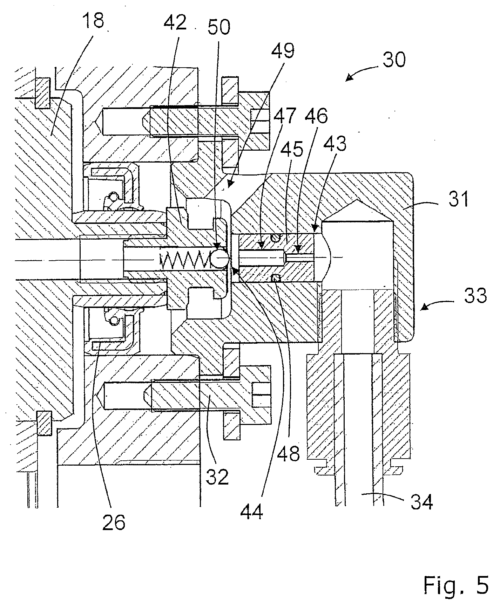

The grease lubrication system 30 is described in more detail with reference to Figs. 5 to 7 showing sectional views of a detail V of Fig.4 in three different states.

As described above, the lubrication system 30 comprises a lubrication fitting 42 mounted to the shaft 18, a connection piece 31 with an inlet 33 and an outlet 43, and a supply line 34 connected with its first end to the inlet 33. The outlet 43 is positioned opposite an entry 44 of the lubricant fitting 42 for supplying lubricant to the lubricant fitting 42. The lubricant fitting 42 shown is provided with a check valve element 50 at its entry, which check valve element 50 is for example spring-supported.

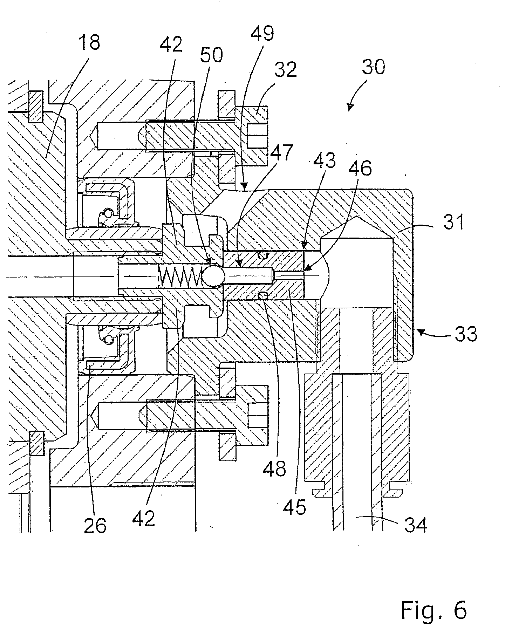

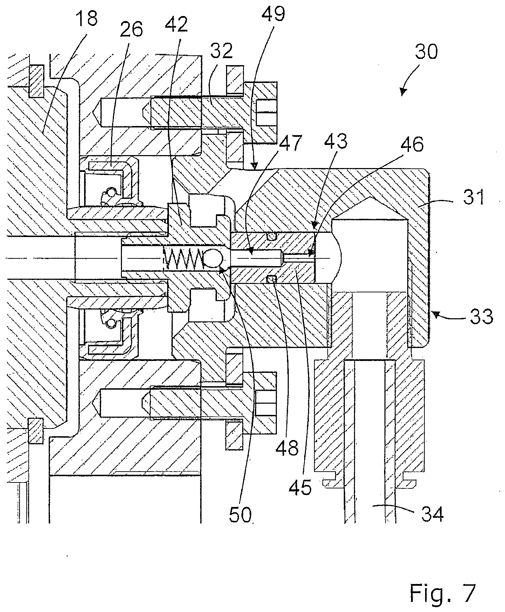

In the embodiment shown, an operating element 45 provided with a lubricant passage 46, 47 is slidably mounted in the outlet 43. The operating element 45 is moveable into and out of a supply position shown in Figs. 6 and 7, in which supply position the front end of the operating element 45 contacts the lubricant fitting 42.

The lubricant passage 46, 47 of the operating element 45 shown is provided with a first lubricant passage part 46 and a second lubricant passage part 47 arranged downstream of the first lubricant passage part 46 in a lubricant supply direction, wherein the diameter of the first lubricant passage part 46 is smaller than the diameter of the second lubricant passage part 47.

The connection piece 31 is further provided with a bypass opening 49, which bypass opening 49 communicates with the outlet 43 at an outside of the connection piece 31 with an exit side of the outlet 43.

The operating element 45 is shown in more detail in Fig. 8. The operating element 45 has a circular cross-section and is moveably mounted in the outlet 43, more in particular is as well axially slidably as rotatably mounted in the outlet 43. A sealing ring 48 is mounted in a radial groove 55 provided on an outer surface of the operating element 45, which sealing ring 48 seals a gap between the operating element 45 and the wall of the outlet 43. As shown in more detail in Fig. 8, at the end 58 of the operating element 45 that in use comes into contact with the lubricant fitting 42, the operating element 45 has a radially directed surface 56 located near the second lubricant passage part 47 and a beveled surface 57 that is located further away from the second lubricant passage part 47. This is advantageous to limit the friction between the operating element 45 and the lubricant fitting 42, and also to limit the effects of wear.

The operation of the lubrication system according to the invention will be explained in the following with reference to Figs. 5 to 7. Fig. 5 shows the lubrication system 30 prior to a supply of lubricant. When supplying a lubricant, in particular grease, via the grease nipple 35 (see Fig. 2), the lubricant reaching the operating element 45 will pass through the lubricant passage 46, 47 in the operating element 45. Due to the viscosity of the lubricant, in particular the grease, the lubricant will enter slowly into the lubricant passage 46, 47 and flow slowly through the lubricant passage 46, 47. Supplied lubricant will, hence act on the rear end of the operating element 45, this means on the end on the right side in Fig. 5. The supplied lubricant thereby forces the operating element 45 towards the lubricant fitting 42 until the operating element 45 reaches a supply position, in which the operating element 45 comes into contact with the lubricant fitting 42 as shown in Fig. 6.

In case the shaft 18 is driven to rotate about its shaft axis 4 when supplying the lubricant, depending on the amount of friction between the operating element 45 and the lubricant fitting 42 and the amount of friction at the height of the sealing ring 48, the operating element 45 contacting the rotating lubricant fitting 42 will whether or not be rotated together with the lubricant fitting 42. Of course, it is also possible to supply the lubricant in rest state, when the shaft 18 and, thus, the lubricant fitting 42 are not rotating.

If the lubricant supply is continued after the operating element 45 contacts the lubricant fitting 42, the lubricant acts on the non-return valve element 50 forcing the non-return valve element 50 into its opening position shown in Fig. 7 and the lubricant can be supplied to the lubricant channel system with lubricant channels 37, 38, 39 and, thus to the bearing 28.

When stopping the lubricant supply, the non-return valve element 50 will return to its closed position and the lubricant thereby forced out of the lubricant fitting 42 will ensure the operating element 45 to move out of the supply position into its rest position in which the operating element 45 is arranged at a distance from the lubricant fitting 42 and does not contact the lubricant fitting 42.

Excessive lubricant can flow out of the connection piece 31 via the bypass opening 49 provided at an upper side of the connection piece 31 and an operator can then remove the excessive lubricant.

When again supplying lubricant via the grease nipple 35, the operating element 45 will return into the supply position shown in Fig. 6.

The lubrication system, the use, the device and the weaving machine according to the invention are not limited to the embodiments described by way of example and illustrated in the drawings. Alternatives and combinations of the described and illustrated embodiments that fall under the claims are also possible.

## Claims

1. Lubrication system for a drive system (2) of a weaving machine, the drive system (2) comprising a housing (19) arranged stationary at the weaving machine and a shaft (18) rotatably arranged in a fixed position in the housing (19), wherein the shaft (18) is provided with a first lubricant channel (37) extending at least at a first end coaxially to the shaft axis (4) of the shaft (18), **characterized in that** the lubrication system (30) comprises a lubricant fitting (42) adapted to be mounted to the first end of the first lubricant channel (37) for rotation with the shaft (18) and a connection piece (31) adapted to be arranged stationary at the housing (19), the connection piece (31) comprising an inlet (33) adapted to receive a lubricant supply line (34) and an outlet (43) positioned opposite an entry (44) of the lubricant fitting (42) for supplying lubricant to the lubricant fitting (42).

2. Lubrication system according to claim 1, **characterized in that** an operating element (45) provided with a lubricant passage (46, 47) is slidably mounted in the outlet (43), wherein the operating element (45) is moveable into and out of a supply position, in which supply position the front end of the operating element (45) contacts the lubricant fitting (42).

3. Lubrication system according to claim 2, **characterized in that** the lubricant passage (46, 47) is provided with a first lubricant passage part (46) and a second lubricant passage part (47) arranged downstream of the first lubricant passage part (46) in a lubricant supply direction, wherein the diameter of the first lubricant passage part (46) is smaller than the diameter of the second lubricant passage part (47).

4. Lubrication system according to claim 2 or 3, **characterized in that** the operating element (45) is rotatably mounted in the outlet (43).

5. Lubrication system according to any one of claims 2 to 4, **characterized in that** a sealing ring (48) is provided between the operating element (45) and the connection piece (31).

6. Lubrication system according to any one of claims 1 to 5, **characterized in that** the connection piece (31) is provided with a bypass opening (49) communicating with an outside of the connection piece (31) with an exit side of the outlet (43) for excessive lubricant.

7. Lubrication system according to any one of claims 1 to 6, **characterized in that** the lubricant fitting (42) is provided with a valve element at its entry (44), in particular a check valve element (50).

8. Lubrication system according to any one of claims 1 to 7, **characterized in that** a lubricant supply line (34) having a first end and a second end is connected with its first end to the inlet (33) of the connection piece (31), wherein its second end is provided with a grease nipple (35).

9. Lubrication system according to any one of claims 1 to 8, **characterized in that** the lubrication system (30) is adapted to use a grease as the lubricant.

10. Use of a lubrication system according to any one of claims 1 to 9 in a drive system for a weaving machine, in particular in a drive system (2) of a shed forming device for a weaving machine, the drive system (2) comprising a housing (19) and a shaft (18) rotatably mounted in a fixed position in the housing (19), wherein the shaft (18) is provided with a first lubricant channel (37) extending at least at a first end coaxially to the shaft axis (4).

11. Device for a weaving machine comprising a drive system, in particular a shed forming device for a weaving machine, the drive system comprising a housing (19) and a shaft (18) rotatably mounted in a fixed position in the housing (19), wherein a first lubricant channel (37) is provided in the shaft (18) extending at least at a first end coaxially to the shaft axis (4), the device further comprising a lubrication system (30) according to any one of claims 1 to 9, wherein the lubrication system (30) comprises a lubricant fitting (42) adapted to be mounted to the first end of the first lubricant channel (37) for rotation with the shaft (18) and a connection piece (31) adapted to be arranged stationary at the housing (19), the connection piece (31) comprising an inlet (33) adapted to receive a lubricant supply line (34) and an outlet (43) arranged opposite the lubricant fitting (42) for supplying lubricant to the lubricant fitting (42).

12. Device according to claim 11, **characterized in that** the device is a shed forming device and the drive system (2) comprises the shaft (18), a first transmission element (3) mounted to the shaft (18) so as to be rotatable with the shaft (18), and a second transmission element (5) mounted to the first transmission element (3) so as to be rotatable about a rotation axis (29) provided on the first transmission element (3).

13. Device according to claim 12, **characterized in that** a lubricant channel system is provided, comprising the first lubricant channel (37) extending coaxially to the shaft axis (4), a second lubricant channel (38) extending radially to the shaft axis (4) in a mounting area of the first transmission element (3), and a third lubricant channel (39) communicating with the second lubricant channel (38) and with a bearing (28), by means of which bearing (28) the second transmission element (5) is mounted to the first transmission element (3).

14. Device according to any one of claims 11 to 13, **characterized in that** the shaft (18) is mounted in the housing (19) by means of two bearings (51, 52), wherein the bearings (51, 52) for mounting the shaft (18) in the housing (19) are lubricated using an oil lubrication system, which is separated by means of sealing elements (25, 26) from the lubrication system (30).

15. Weaving machine comprising at least one device according to any one of claims 11 to 14.

## Patentansprüche

1. Schmiersystem für ein Antriebssystem (2) einer Webmaschine, das Antriebssystem (2) umfassend ein an der Webmaschine stationär angeordnetes Gehäuse (19) und eine im Gehäuse (19) drehbar in einer festen Position angeordnete Achse (18), wobei die Achse (18) mit einem ersten Schmiermittelkanal (37) versehen ist, der sich mindestens an einem ersten Ende koaxial zur Wellenachse (4) der Achse (18) erstreckt, **dadurch gekennzeichnet, dass** das Schmiersystem (30) eine Schmiermittelarmatur (42) umfasst, die dazu ausgebildet ist, an dem ersten Ende des ersten Schmiermittelkanals (37) montiert zu werden zur Drehung mit der Achse (18), und ein Verbindungsstück (31), das dazu ausgebildet ist, stationär an dem Gehäuse (19) angeordnet zu werden, das Verbindungsstück (31) umfassend einen Einlass (33), der dazu ausgebildet ist, eine Schmiermittelzuführleitung (34) aufzunehmen, und einen Auslass (43), der gegenüber einem Eintritt (44) der Schmiermittelarmatur (42) positioniert ist, zum Zuführen von Schmiermittel zur Schmiermittelarmatur (42).

2. Schmiersystem nach Anspruch 1, **dadurch gekennzeichnet, dass** in dem Auslass (43) ein mit einem Schmiermitteldurchtritt (46, 47) versehenes Bedienungselement (45) gleitverschiebbar montiert ist, wobei das Bedienungselement (45) in eine Zuführposition hinein und daraus heraus bewegbar ist, in welcher Zuführposition das Vorderende des Bedienungselements (45) mit der Schmiermittelarmatur (42) in Kontakt steht.

3. Schmiersystem nach Anspruch 2, **dadurch gekennzeichnet, dass** der Schmiermitteldurchtritt (46, 47) mit einem ersten Schmiermitteldurchtrittteil (46) und einem zweiten Schmiermitteldurchtrittteil (47), der stromabwärts des ersten Schmiermitteldurchtrittteils (46) in einer Schmiermittelzuführ-richtung angeordnet ist, versehen ist, wobei der Durchmesser des ersten Schmiermitteldurchtrittteils (46) kleiner ist als der Durchmesser des zweiten Schmiermitteldurchtrittteils (47).

4. Schmiersystem nach Anspruch 2 oder 3, **dadurch gekennzeichnet, dass** das Bedienungselement (45) drehbar in dem Auslass (43) montiert ist.

5. Schmiersystem nach einem der Ansprüche 2 bis 4, **dadurch gekennzeichnet, dass** zwischen dem Bedienungselement (45) und dem Verbindungsstück (31) ein Dichtungsring (48) vorgesehen ist.

6. Schmiersystem nach einem der Ansprüche 1 bis 5, **dadurch gekennzeichnet, dass** das Verbindungsstück (31) mit einer Bypassöffnung (49) versehen ist, die mit einer Aussenseite des Verbindungsstücks (31) mit einer Ausgangsseite des Auslasses (43) für überschüssiges Schmiermittel in Verbindung steht.

7. Schmiersystem nach einem der Ansprüche 1 bis 6, **dadurch gekennzeichnet, dass** die Schmiermittelarmatur (42) an ihrem Eintritt (44) mit einem Ventilelement, insbesondere einem Rückschlagventilelement (50), versehen ist.

8. Schmiersystem nach einem der Ansprüche 1 bis 7, **dadurch gekennzeichnet, dass** eine Schmiermittelzuführleitung (34) mit einem ersten Ende und einem zweiten Ende mit seinem ersten Ende mit dem Einlass (33) des Verbindungsstücks (31) verbunden ist, wobei sein zweites Ende mit einem Fettnippel (35) versehen ist.

9. Schmiersystem nach einem der Ansprüche 1 bis 8, **dadurch gekennzeichnet, dass** das Schmiersystem (30) dazu ausgebildet ist, ein Fett als das Schmiermittel zu verwenden.

10. Verwendung eines Schmiersystems nach einem der Ansprüche 1 bis 9 in einem Antriebssystem für eine Webmaschine, insbesondere in einem Antriebssystem (2) für eine Fachbildungsvorrichtung für eine Webmaschine, das Antriebssystem (2) umfassend ein Gehäuse (19) und eine im Gehäuse (19) drehbar in einer festen Position montierte Achse (18), wobei die Achse (18) mit einem ersten Schmiermittelkanal (37) versehen ist, der sich mindestens an einem ersten Ende koaxial zur Wellenachse (4) erstreckt.

11. Vorrichtung für eine Webmaschine umfassend ein Antriebssystem, insbesondere eine Fachbildungsvorrichtung für eine Webmaschine, das Antriebssystem umfassend ein Gehäuse (19) und eine im Gehäuse (19) drehbar in einer festen Position montierte Achse (18), wobei ein erster Schmiermittelkanal (37) in der Achse (18) vorgesehen ist, der sich mindestens an einem ersten Ende koaxial zur Wellenachse (4) erstreckt, die Vorrichtung weiter umfassend ein Schmiersystem (30) nach einem der Ansprüche 1 bis 9, wobei das Schmiersystem (30) eine Schmiermittelarmatur (42) umfasst, die dazu ausgebildet ist, an dem ersten Ende des ersten Schmiermittelkanals (37) montiert zu werden zur Drehung mit der Achse (18), und ein Verbindungsstück (31), das dazu ausgebildet ist, stationär an dem Gehäuse (19) angeordnet zu werden, das Verbindungsstück (31) umfassend einen Einlass (33), der dazu ausgebildet ist, eine Schmiermittelzuführleitung (34) aufzunehmen, und einen Auslass (43), der gegenüber der Schmiermittelarmatur (42) zum Zuführen von Schmiermittel zur Schmiermittelarmatur (42) angeordnet ist.

12. Vorrichtung nach Anspruch 11, **dadurch gekennzeichnet, dass** die Vorrichtung eine Fachbildungsvorrichtung ist und das Antriebssystem (2) umfasst die Achse (18), ein erstes Übertragungselement (3), das so an der Achse (18) montiert ist, dass es mit der Achse (18) drehbar ist, und ein zweites Übertragungselement (5), das so an dem ersten Übertragungselement (3) montiert ist, dass es um eine Drehachse (29), die an dem ersten Übertragungselement (3) vorgesehen ist, drehbar ist.

13. Vorrichtung nach Anspruch 12, **dadurch gekennzeichnet, dass** ein Schmiermittelkanalsystem vorgesehen ist, umfassend den ersten Schmiermittelkanal (37), der sich koaxial zur Wellenachse (4) erstreckt, einen zweiten Schmiermittelkanal (38), der sich radial zur Wellenachse (4) in einem Montagebereich des ersten Übertragungselements (3) erstreckt, und einen dritten Schmiermittelkanal (39), der mit dem zweiten Schmiermittelkanal (38) und mit einem Lager (28) in Verbindung steht, mittels welchem Lager (28) das zweite Übertragungselement (5) an dem ersten Übertragungselement (3) montiert ist.

14. Vorrichtung nach einem der Ansprüche 11 bis 13, **dadurch gekennzeichnet, dass** die Achse (18) mittels zweier Lager (51, 52) im Gehäuse (19) montiert ist, wobei die Lager (51, 52) für die Montage der Achse (18) im Gehäuse (19) unter Verwendung eines Ölschmiersystems geschmiert werden, welches mittels Dichtungselementen (25, 26) vom Schmiersystem (30) getrennt ist.

15. Webmaschine umfassend mindestens eine Vorrichtung nach einem der Ansprüche 11 bis 14.

## Revendications

1. Système de lubrification pour un système d'entraînement (2) d'une machine à tisser, le système d'entraînement (2) comprenant un carter (19) disposé stationnaire sur la machine à tisser et un arbre (18) disposé rotatif dans une position fixe dans le carter (19), dans lequel l'arbre (18) est prévu d'un premier canal de lubrifiant (37) s'étendant au moins à la première extrémité coaxialement à l'axe d'arbre (4) de l'arbre (18), **caractérisé en ce que** le système de lubrification (30) comprend un raccord de lubrifiant (42) adapté pour être monté sur la première extrémité du premier canal de lubrifiant (37) pour rotation avec l'arbre (18) et une pièce de connexion (31) adaptée pour être disposée stationnaire sur le carter (19), la pièce de connexion (31) comprenant une entrée (33) adaptée pour recevoir une conduite d'alimentation en lubrifiant (34) et une sortie (43) positionnée à l'opposé d'une entrée (44) du raccord de lubrifiant (42) pour alimenter de lubrifiant au raccord de lubrifiant (42).

2. Système de lubrification selon la revendication 1, **caractérisé en ce qu'**un élément de commande (45) prévu d'un passage de lubrifiant (46, 47) est monté coulissant dans la sortie (43), dans lequel l'élément de commande (45) est mobile dans et hors d'une position d'alimentation, dans laquelle position d'alimentation l'extrémité avant de l'élément de commande (45) est en contact avec le raccord de lubrifiant (42).

3. Système de lubrification selon la revendication 2, **caractérisé en ce que** le passage de lubrifiant (46, 47) est prévu d'une première partie de passage de lubrifiant (46) et d'une deuxième partie de passage de lubrifiant (47) disposée en aval de la première partie de passage de lubrifiant (46) dans une direction d'alimentation en lubrifiant, dans lequel le diamètre de la première partie de passage de lubrifiant (46) est inférieur au diamètre de la deuxième partie de passage de lubrifiant (47).

4. Système de lubrification selon la revendication 2 ou 3, **caractérisé en ce que** l'élément de commande (45) est monté rotatif dans la sortie (43).

5. Système de lubrification selon l'une quelconque des revendications 2 à 4, **caractérisé en ce qu'**une bague d'étanchéité (48) est prévue entre l'élément de commande (45) et la pièce de connexion (31).

6. Système de lubrification selon l'une quelconque des revendications 1 à 5, **caractérisé en ce que** la pièce de connexion (31) est prévue d'une ouverture de dérivation (49) communiquant avec un extérieur de la pièce de connexion (31) avec un côté de sortie de la sortie (43) pour un excès de lubrifiant.

7. Système de lubrification selon l'une quelconque des revendications 1 à 6, **caractérisé en ce que** le raccord de lubrifiant (42) est prévu d'un élément de soupape à son entrée (44), en particulier d'un élément de soupape de retenue (50).

8. Système de lubrification selon l'une quelconque des revendications 1 à 7, **caractérisé en ce qu'**une conduite d'alimentation en lubrifiant (34) avec une première extrémité et une deuxième extrémité est reliée à sa première extrémité à l'entrée (33) de la pièce de connexion (31), dans lequel sa deuxième extrémité est prévue d'un graisseur (35).

9. Système de lubrification selon l'une quelconque des revendications 1 à 8, **caractérisé en ce que** le système de lubrification (30) est adapté pour utiliser une graisse comme lubrifiant.

10. Usage d'un système de lubrification selon l'une quelconque des revendications 1 à 9 dans un système d'entraînement pour une machine à tisser, en particulier dans un système d'entraînement (2) d'un dispositif de formation de la foule pour une machine à tisser, le système d'entraînement (2) comprenant un carter (19) et un arbre (18) monté rotatif dans une position fixe dans le carter (19), dans lequel l'arbre (18) est prévu d'un premier canal de lubrifiant (37) s'étendant au moins à la première extrémité coaxialement à l'axe d'arbre (4).

11. Dispositif pour une machine à tisser comprenant un système d'entraînement, en particulier un dispositif de formation de la foule pour une machine à tisser, le système d'entraînement comprenant un carter (19) et un arbre (18) monté rotatif dans une position fixe dans le carter (19), dans lequel un premier canal de lubrifiant (37) est prévu dans l'arbre (18) s'étendant au moins à une première extrémité coaxialement à l'axe d'arbre (4), le dispositif comprenant en outre un système de lubrification (30) selon l'une quelconque des revendications 1 à 9, dans lequel le système de lubrification (30) comprend un raccord de lubrifiant (42) adapté pour être monté sur la première extrémité du premier canal de lubrifiant (37) pour rotation avec l'arbre (18) et une pièce de connexion (31) adaptée pour être disposée stationnaire sur le carter (19), la pièce de connexion (31) comprenant une entrée (33) adaptée pour recevoir une conduite d'alimentation en lubrifiant (34) et une sortie (43) disposée à l'opposé du raccord de lubrifiant (42) pour alimenter de lubrifiant au raccord de lubrifiant (42).

12. Dispositif selon la revendication 11, **caractérisé en ce que** le dispositif est un dispositif de formation de la foule et le système d'entraînement (2) comprend l'arbre (18), un premier élément de transmission (3) monté sur l'arbre (18) de manière à pouvoir tourner avec l'arbre (18), et un deuxième élément de transmission (5) monté sur le premier élément de transmission (3) de manière à pouvoir tourner autour d'un axe de rotation (29) disposé sur le premier élément de transmission (3).

13. Dispositif selon la revendication 12, **caractérisé en ce qu'**un système de canal de lubrifiant est prévu, comprenant le premier canal de lubrifiant (37) s'étendant coaxialement à l'axe d'arbre (4), un deuxième canal de lubrifiant (38) s'étendant radialement à l'axe d'arbre (4) dans une zone de montage du premier élément de transmission (3), et un troisième canal de lubrifiant (39) communiquant avec le deuxième canal de lubrifiant (38) et avec un palier (28), au moyen duquel palier (28) le deuxième élément de transmission (5) est monté sur le premier élément de transmission (3).

14. Dispositif selon l'une quelconque des revendications 11 à 13, **caractérisé en ce que** l'arbre (18) est monté dans le carter (19) au moyen de deux paliers (51, 52), dans lequel les paliers (51, 52) pour monter l'arbre (18) dans le carter (19) sont lubrifiés en utilisant un système de lubrification par huile, qui est séparé au moyen d'éléments d'étanchéité (25, 26) du système de lubrification (30).

15. Machine à tisser comprenant au moins un dispositif selon l'une quelconque des revendications 11 à 14.
